# EUROPÄISCHE PATENTANMELDUNG

(11) **EP 0 699 496 A1**
(43) Veröffentlichungstag der Anmeldung: **06.03.1996**
(21) Anmeldenummer: 95109572.8
(22) Anmeldetag: 21.06.1995
(51) Int. Cl.: B23D 45/14, B23D 47/04

(54) **Doppelgehrungssäge**

(30) Priorität: 02.09.1994 DE 4431236
(71) Anmelder: de Man, Gerardus, D-33775 Versmold/Hesselteich (DE)
(72) Erfinder: de Man, Gerardus, D-33775 Versmold/Hesselteich (DE)
(74) Vertreter: Stracke, Alexander, Dipl.-Ing.

(57) **Zusammenfassung**

Die Erfindung betrifft eine Doppelgehrungssäge (10) für Profile (18, 26) oder ähnliches mit einer Spanneinrichtung zum Halten der Profile (18, 26) während des Sägens und zwei Sägeköpfen (12, 14), von denen zumindest ein Sägekopf (14) in bezug auf den Abstand zu dem anderen Sägekopf (12) einstellbar ausgeführt ist und die für den Sägevorgang gleichzeitig bewegt und anschließend wieder zurückbewegt werden. Erfindungsgemäß ist eine Zuführeinrichtung (30) vorgesehen, die zumindest ein zuzusägendes Profil (18) aus einer Ausgangsposition in zumindest eine Sägeposition bei den Sägeköpfen (12, 14) transportiert, so daß dieses von der Spanneinrichtung für den Sägevorgang fixiert werden kann.

## Beschreibung

Die Erfindung betrifft eine Doppelgehrungssäge gemäß der im Oberbegriff des Anspruches 1 angegebenen Art.

Derartige Doppelgehrungssägen sind schon seit längerem bekannt und weisen einstellbare Sägeköpfe, bzw. einen festen und einen bewegliche Sägekopf auf. Die Sägeköpfe sind auf einem Maschinenbett gelagert und ihr Abstand kann entsprechend der Länge der zuzuschneidenden Profile durch einen motorischen Antrieb eingestellt werden. Die zuzuschneidenden Profile werden von Hand in eine Spannvorrichtung eingelegt, die das Profil während des Sägevorganges fixiert. Für das Zuschneiden des Profils werden die Sägeköpfe bewegt und nach dem Sägen wieder zurückbewegt. Durch die manuelle Bedienung dieser Doppelgehrungssäge ist diese sehr langsam, wodurch sich nur eine bestimmte, relativ niedrige Zuschnittzahl der Profile pro Stunde ergibt.

Es sind zudem Sägen mit automatischer Zuführung der zuzusägenden Profile in den Sägebereich durch eine Zuführeinrichtung bekannt, wobei die Sägen mit einer ortsfesten Sägeeinheit ausgestattet sind. Das zuzusägende Profil wird von der Zuführungseinrichtung nacheinander in die verschiedenen Sägepositionen verfahren, in denen jeweils von der ortsfesten Sägeeinheit der Zuschnitt vorgenommen wird. Die Sägevorgänge für die beiden Gehrungen eines Profils erfolgen hierbei also getrennt voneinander und nacheinander.

Der Erfindung liegt die Aufgabe zugrunde, eine Doppelgehrungssäge nach der im Oberbegriff des Anspruches 1 angegebenen Art derart weiterzubilden, daß die Leistung erhöht wird und die Voraussetzungen für einen automatischen Betrieb geschaffen werden.

Diese Aufgabe wird durch die kennzeichnenden Merkmale des Anspruches 1 in Verbindung mit seinen Oberbegriffsmerkmalen gelöst.

Nunmehr übernimmt eine Zuführeinrichtung die Aufgabe der früheren Bedienperson, wodurch sich weitere Rationalisierungseffekte durch Einsatz einer angepaßten Steuerung und Optimierung des Ablaufes ergeben, wie weiter unten im einzelnen noch dargelegt wird. Die Zuführeinrichtung transportiert zumindest ein zuzusägendes Profil aus einer Ausgangsposition in zumindest eine Sägeposition bei den Sägeköpfen, so daß diese von der Spanneinrichtung für den Sägevorgang fixiert werden können.

Zweckmäßig ist es dabei, daß die Zuführeinrichtung in Abhängigkeit der Betriebsweise der Sägeköpfe gesteuert ist, um einen zeitlich optimierten Betrieb zu gewährleisten. Beispielsweise kann der Bearbeitungsvorgang dann verkürzt werden, wenn die Sägeköpfe und die Zuführeinrichtung gleichzeitig eingestellt bzw. bewegt werden. Die Zuführeinrichtung transportiert also das zuzusägende Profil in die Sägeposition, während der Abstand der Sägeköpfe für den vorbestimmten Zuschnitt der Sägeköpfe eingestellt wird. Durch die zeitweise Überlappung der Bewegungsvorgänge der Zuführeinrichtung und der Sägeköpfe wird nunmehr die Leistung der Doppelgehrungssäge vorteilhaft erhöht.

Beim Sägevorgang fallen in der Regel Späne an, die den Transportbereich der Doppelgehrungssäge beeinträchtigen. Aus diesem Grunde ist es von Vorteil, daß die Zuführeinrichtung oberhalb der Sägeköpfe angeordnet ist.

Um ein einfaches Ankoppeln des zuzusägenden Profils an die Zuführeinrichtung zu ermöglichen, weist die Zuführeinrichtung Greifmittel zum Transportieren der Profile auf. Die Greifmittel haben zudem den Vorteil, daß sie an unterschiedliche Profilausführungen beispielsweise durch Auswechseln der Greifmittel oder durch Ändern des Abstands der Greifmittel zueinander, anpaßbar sind. Damit die Greifmittel durch die beim Sägevorgang anfallenden, insbesondere herunterfallenden Späne nicht beeinträchtigt werden, ergreifen die Greifmittel das Profil von oben.

Mit dem Anheben des Profils durch die Zuführeinrichtung und deren Greifmittel treten große Momente im Bereich der Greifmittel auf. Deshalb ist es günstig, daß die Greifmittel um eine horizontale Achse schwenkbar gelagert sind, so daß, beispielsweise wenn die Profile im vorderen Bereich ergriffen werden, das Profil und die Greifmittel eine Ausgleichsbewegung durchführen können.

Die zuzusägenden Profile werden von der Zuführeinrichtung zumindest bereichsweise angehoben und in die Sägeposition verfahren. Für diese lineare Bewegung des Profils quer zur Transportrichtung eignet sich ein Hubzylinder, da diese die Bewegungen mit geringem Aufwand ausführen können und gut steuerbar sind.

Um bei der linearen Bewegung eine zeitliche Bewegungsüberlagerung und somit eine Taktverkürzung zu erreichen, weist die Zuführeinrichtung einen in Reihe geschalteten Kurzhubzylinder und einen Langhubzylinder auf. Insbesondere ist dabei einer der beiden Zylinder als ein in dem anderen Zylinder gelagerter Kolben ausgebildet. Nunmehr ist es also möglich, daß die Bewegung des Kurzhubzylinders als auch des Langhubzylinders gleichzeitig erfolgen können, wodurch eine Arbeitstaktverkürzung ermöglicht wird.

Als zweckmäßig hat es sich erwiesen, daß die Zylinder pneumatisch betrieben werden.

U.a. eine exakte Transportbewegung wird dadurch gewährleistet, daß die Zuführeinrichtung eine in Transportrichtung sich erstreckende Führungsschiene aufweist, entlang der die Greifmittel verfahrbar sind.

Entscheidend für eine Optimierung des Arbeitstaktes der Doppelgehrungssäge nach der Erfindung ist es u.a., daß die einzelnen Bewegungen und Vorgänge der Doppelgehrungssäge aufeinander abgestimmt sind und sich insbesondere zeitlich überlappen. Beispielsweise ist eine Fördereinrichtung vorgesehen, die in Abhängigkeit der Betriebsweise der Zuführeinrichtung die Profile in die Ausgangsposition fördert, so daß die Zuführeinrichtung jederzeit aus der Ausgangsposition ein zuzusägendes Profil ergreifen kann. Entsprechendes gilt für den Abtransport der zugeschnittenen Profile aus der Sägeposition. Dafür ist eine weitere Fördereinrichtung vorgesehen, die in Abhängigkeit der Betriebsweise der Sägeköpfe die zugeschnittenen Profile aus der Sägeposition fördert.

Für derartige Fördereinrichtungen ist es zweckmäßig, daß diese durch einen Hubschrittförderer gebildet werden, der in Abstimmung mit dem Arbeitstakt der Zuführeinrichtung bzw. der Sägeköpfe arbeitet.

Problematisch beim Abtransport der zugeschnittenen Profile aus der Sägeposition sind die unterschiedlichen Längen der zugeschnittenen Profile, weil nämlich entsprechend der Länge der Profile die Sägeköpfe angeordnet werden müssen und in bestimmten Positionen Teile der Fördereinrichtung durch die Sägeköpfe blockiert werden. Insofern stellen die Sägeköpfe eine Einschränkung für die weitere Fördereinrichtung dar, die das zugeschnittene Profil aus der Sägeposition heraus fördert. Die weitere Fördereinrichtung weist daher die Hub-Schritt-Bewegung ausführende Förderfinger auf, die auf der den Sägeköpfen zugewandten Seiten teleskopierbar ausgeführt sind. Damit können in Abhängigkeit der Länge des zugeschnittenen Profils die Förderfinger teleskopiert werden, d.h., daß in der weiteren Fördereinrichtung mehrere teleskopierbare Förderfinger nebeneinander angeordnet und diese so gesteuert sind, daß in Abhängigkeit der Länge des zugeschnittenen Profils lediglich die entsprechend den zugeschnittenen Profilen zugeordneten Förderfinger teleskopiert werden.

Bei Profilzuschnitten stellt im Allgemeinen die Zurückbewegung der Sägeköpfe ein Problem dar, da mit dieser Bewegung in der Regel die Zuschnitte durch das Sägeblatt der jeweiligen Sägeköpfe beschädigt werden. Die zuzuschneidenden Profile werden aber insbesondere so auf Gehrung geschnitten, daß eine Zuschnittbewegung der Sägeköpfe aufeinander zu erfolgt. Daher ist es von Vorteil, daß die Sägeköpfe und die weitere Fördereinrichtung so gesteuert sind, daß das zugeschnittene Profil von der Fördereinrichtung in der Sägeposition angehoben wird, bevor die Sägeköpfe zurückbewegt werden. Mit dem Anheben des Profils entfernt sich der zugeschnittene Bereich der Gehrung des Profils von den Sägeblättern der Sägeköpfe, so daß diese anschließend ungehindert und ohne die Gefahr der Beschädigung des zugeschnittenen Profils zurückbewegt werden können.

Zusätzliche Merkmale und Vorteile ergeben sich auch aus der folgenden Beschreibung einer Ausführungsform der Erfindung im Zusammenhang mit der Zeichnung. Es zeigen:
- Figur 1 bis 8: eine schematische Vorderansicht und Draufsicht auf die Doppelgehrungssäge nach der Erfindung für einen Zuschnitt mit einer Länge von 1.100 mm in unterschiedlichen Arbeitspositionen;
- Figur 9 bis 18: eine Vorderansicht und eine Draufsicht auf die Doppelgehrungssäge nach der Erfindung für eine Zuschnittlänge des zuzusägenden Profils von 1.250mm in unterschiedlichen Arbeitspositionen;
- Figur 19 und 20: eine Arbeitsposition der Doppelgehrungssäge in der Vorderansicht und in der Draufsicht für eine Zuschnittlänge eines Profils von 2.400mm;
- Figur 21: eine Zeitachse mit den unterschiedlichen Arbeitstakten eines Sägeautomaten nach dem Stand der Technik; und
- Figur 22: eine Zeitachse mit den unterschiedlichen Arbeitstakten der Doppelgehrungssäge nach der Erfindung.

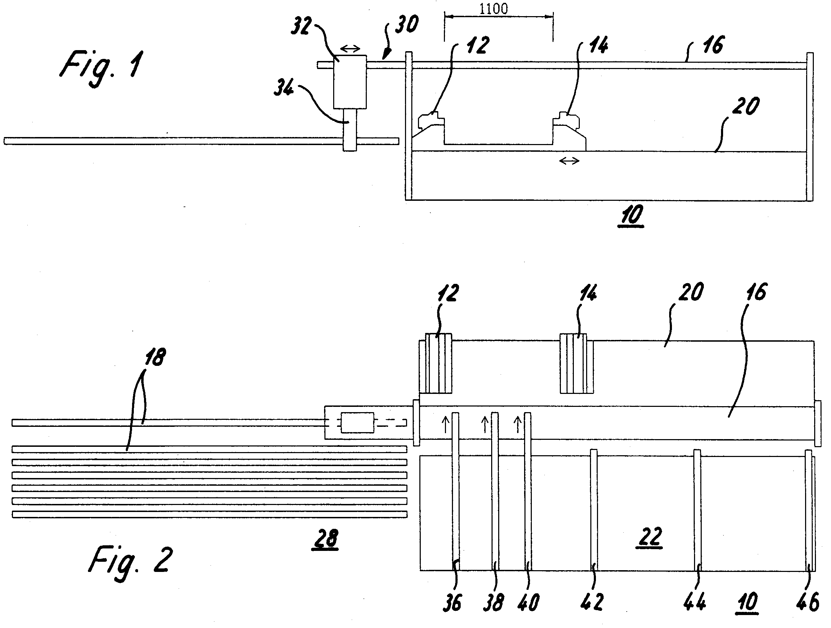

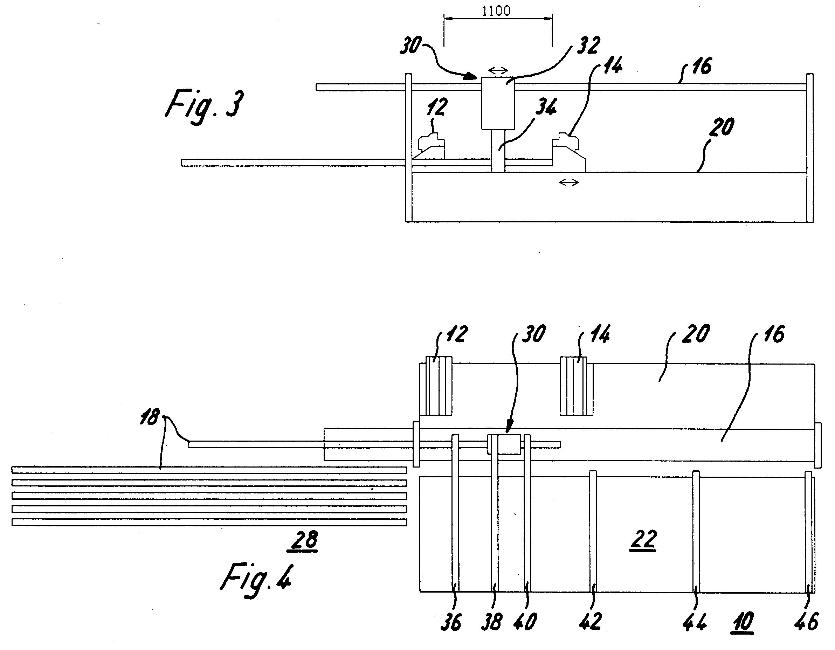

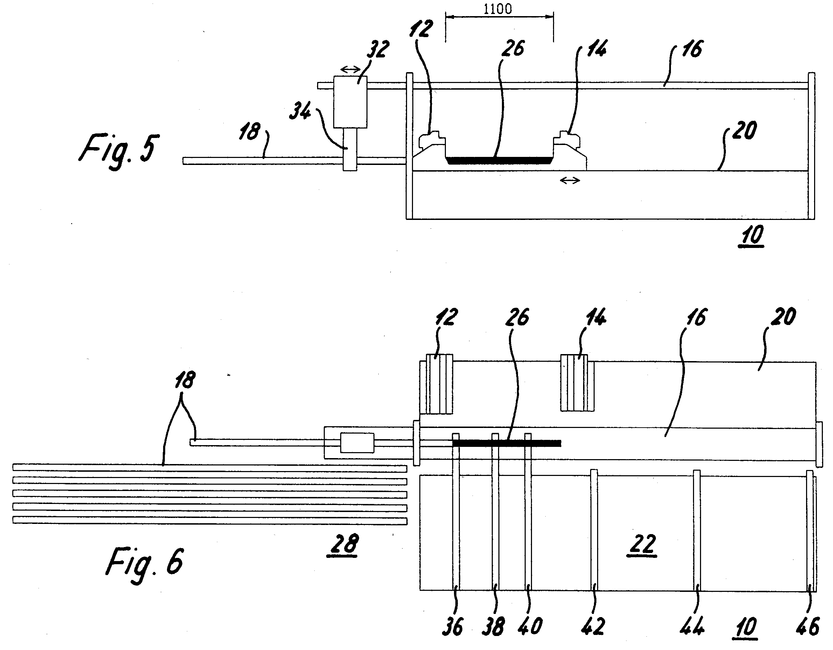

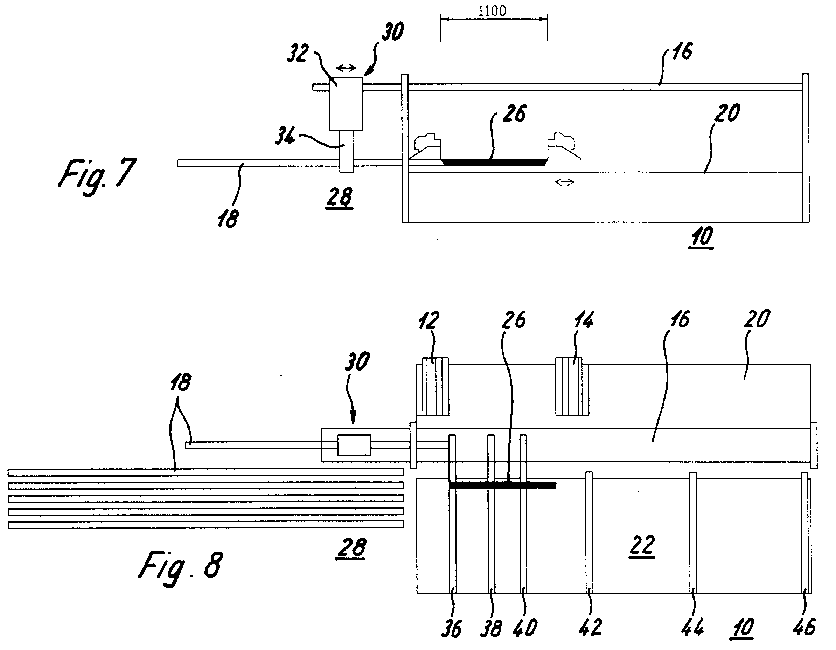

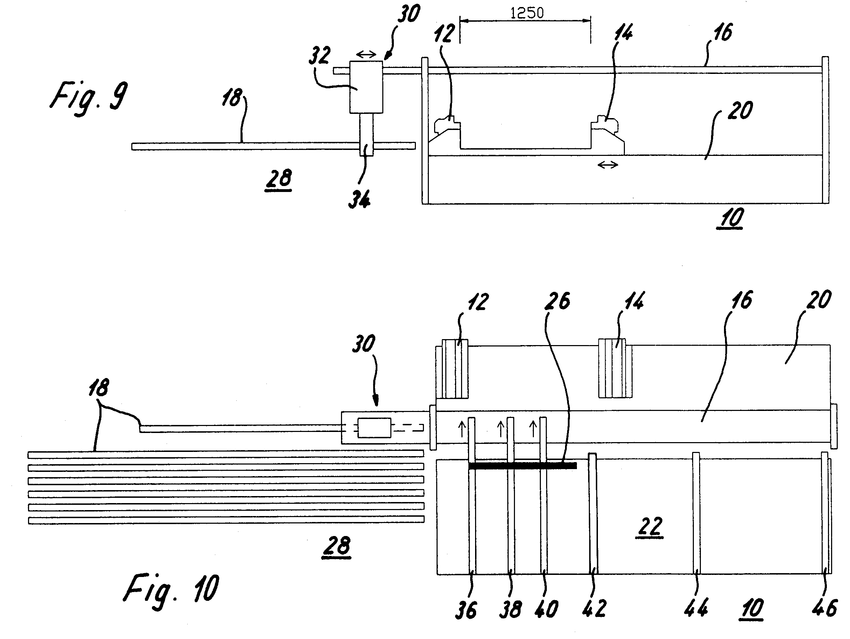

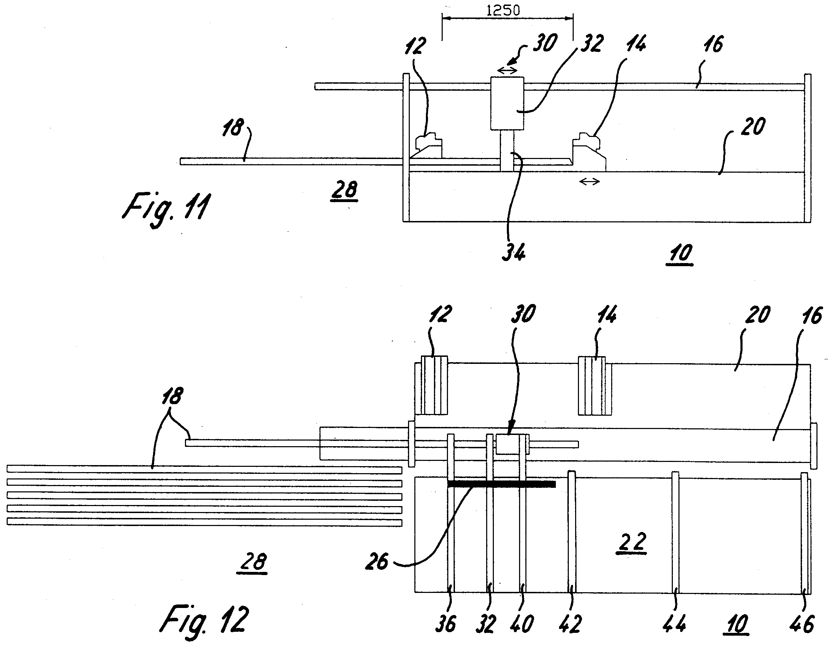

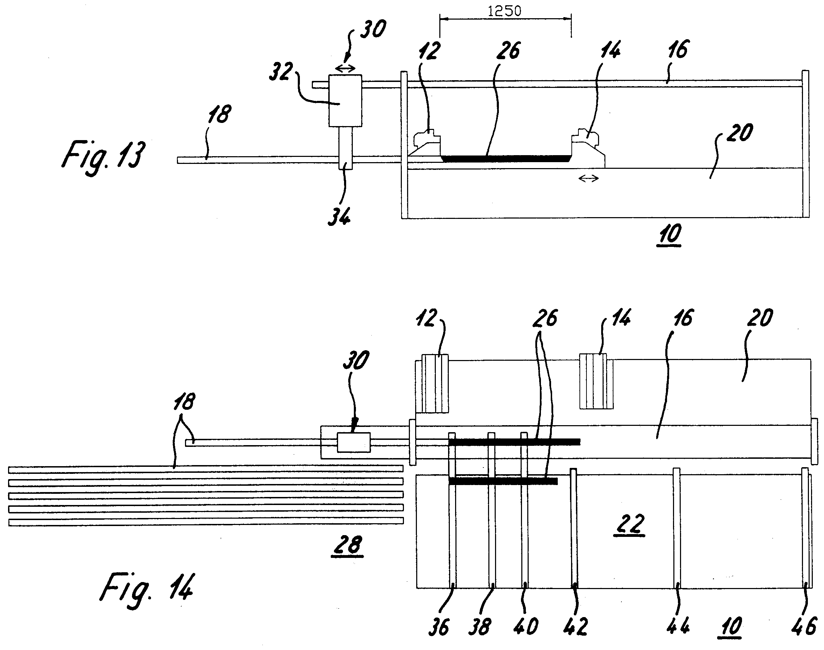

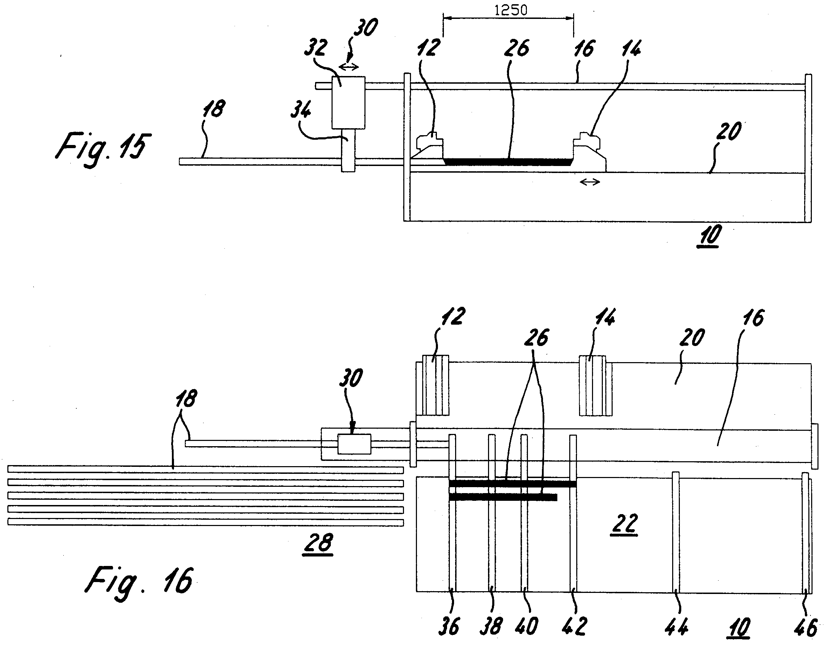

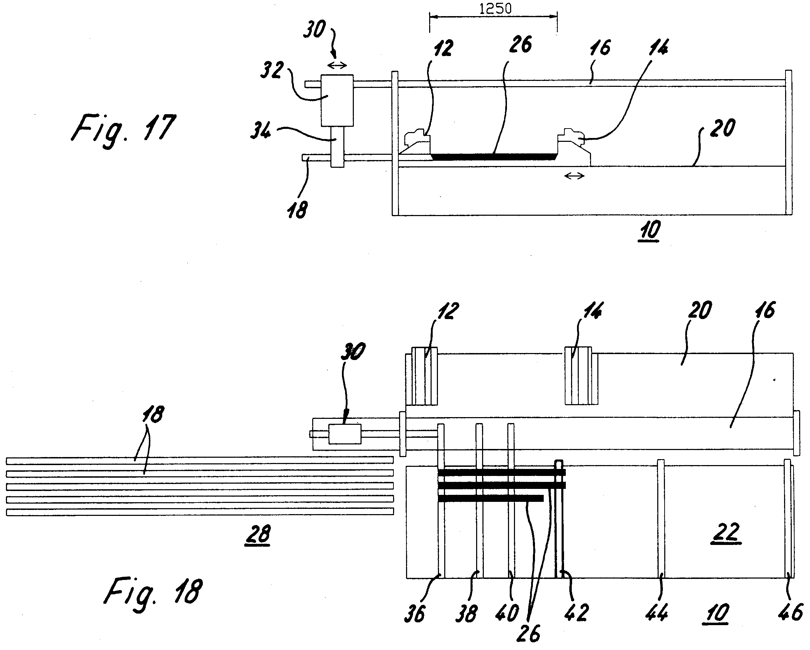

In den Figuren 1 bis 20 ist eine Doppelgehrungssäge 10 nach der Erfindung in Vorderansicht und Draufsicht in unterschiedlichen Arbeitszuständen schematisiert dargestellt. Die Doppelgehrungssäge 10 weist zwei Sägeköpfe 12 und 14 auf, wobei der in Bezug auf Figur 1 linke Sägekopf 12 ortsfest angeordnet und der rechte Sägekopf 14 verstellbar gelagert ist. Oberhalb der Sägeköpfe 12, 14 ist eine Führungsschiene 16 angeordnet, die seitlich in den Vorratsbereich der zuzuschneidenden Profile 18 hinein reicht. Die Sägeköpfe 12, 14 sind auf einem Sägetisch 20 angeordnet, wobei der Sägekopf 14 linear auf dem Sägetisch 20 verstellbar ist. In den Sägetisch 20 ist ein Hubschrittförderer 22 integriert, der mit Förderfingern 36 bis 46 die zugeschnittenen Profile 26 aus der Sägeposition herausfördert.

Die Sägeposition ist die Stellung, in der das zuzuschneidende Profil 18 von - hier im einzelnen nicht dargestellten - Spannmitteln fixiert und durch Bewegen der Sägeköpfe 12 und 14 zu einem bestimmten Anteil aufeinander zu auf Gehrung geschitten wird.

Parallel zum Sägetisch 20 ist ein im einzelnen nicht dargestellter Hubschrittförderer 28 angeordet, der die zuzuschneidenden Profile 18 in eine Ausgangsposition fördert.

Die Führungsschiene 16 ist Teil einer Zuführeinrichtung 30, die einen Langhubzylinder 32 und einen Kurzhubzylinder 34 aufweist. Der Langhubzylinder 32 ist auf der Führungsschiene 16 verschiebbar angeordnet. Der Kurzhubzylinder 34 ist als Kolben in dem Langhubzylinder 32 gelagert und weist an seinem unteren Ende Greifmittel auf. Über den Langhubzylinder 32 und den Kurzhubzylinder 34 wird eine lineare Bewegung senkrecht zu der Führungsschiene 16 ermöglicht.

Zum Zuführen des zuzuschneidenden Profils 18 in die Sägeposition verfahren die Zylinder 32, 34 mit den Greifmnitteln in den in bezug auf Figur 1 äußersten linken Bereich der Führungsschiene 16. Die Greifmittel werden über den Langhub- und Kurzhubzylinder 32, 34 nach unten verfahren, so daß sie das zuzuschneidende Profil 18 in der Ausgangsposition ergreifen können. Anschließend wird der Kurzhubzylinder 34 nach oben verfahren, so daß der vordere Bereich des zuzuschneidenden Profils 18 angehoben wird. Damit das zuzuschneidende Profil 18 und die Greifmittel sich nicht verklemmen, sind die Greifmittel drehbar gelagert. Mit dem nach oben Verfahren des Kurzhubzylinders 34 und/oder des Langhubzylinders 32 werden nunmehr die Greifmittel zusammen mit dem zuzuschneidenden Profil 18 entsprechend verschwenkt.

Die Zuführvorrichtung 30 ist mit einem Servo-Motor versehen, mittels dem der Langhubzylinder 32 mit dem Kuzrhubzylinnder 34 und den Greifmitteln entlang der Führungsschiene 16 in vorbestimmter Weise verfahrbar ist.

Der Langhubzylinder 32 und der Kurzhubzylinder 34 befinden sich in ihrer Grundstellung, wenn sie eingefahren sind.

In den Figuren 1 bis 20 sind, wie oben bereits erwähnt, die einzelnen Arbeitsschritte dargestellt. Beispielsweise sollen aus einem zuzuschneidenden Profil 18 folgende Profillängen auf Gehrung geschnitten werden: 2 mal 1.250mm; 1 mal 1.100mm; 1 mal 2.400mm.

Die Steuereinrichtung der Doppelgehrungssäge 10 ermittelt daraufhin die Optimierung für den Zuschnitt. Es ist eine Reihenfolge des Zuschnitts mit größer werdender Profillänge, nämlich 1.100mm, 1.250mm, 1.250mm und anschl. 2.400mm festgelegt worden. Der Sägekopf 14 verfährt dabei zunächst auf das Maß 1.100mm in bezug auf den Sägekopf 12. Gleichzeitig fährt der Langhubzylinder 32 und der Kurzhubzylinder 34 in ihre unterste Stellung und das zuzuschneidende Profil 18 wird von den Greifmitteln ergriffen. Der Kurzhubzylinder 34 hebt das zuzuschneidende Profil 18 um einige Millimeter an. Über den Servo-Motor wird der Langhubzylinder 32 mit dem Kurzhubzylinder 34 verfahren, so daß das zuzuschneidende Profil 18 in die Sägeposition gelangt. Dann senkt der Kurzhubzylinder 34 das zuzusägende Profil 18 ab, das anschließend von der Spannvorrichtung für den Sägevorgang fixiert wird. Die Spannvorrichtung hält das zuzusägende Profil 18 einmal durch Konterprofile, auf die weiter unten noch eingegangen wird, und das andere Mal durch von oben an das Profil 18 angreifende Spannzylinder mit Spannmittel.

Die Greifmittel lassen sodann das Profil 18 los. Der Langhubzylinder 32 als auch der Kurzhubzylinder 34 verfahren nunmehr mit den Greifmitteln in ihre obere Endlage, der Grundstellung. Dort angekommen wird der Langhubzylinder 32 mit dem Kurzhubzylinder 34 und den Greifmitteln wieder in seine Ausgangsstellung im linken äußeren Bereich der Führungsschiene 16 verfahren. Sobald der Langhubzylinder 32 in dieser Position angekommen ist, verfahren der Langhubzylinder 32 als auch Kurzhubzylinder 34 mit den Greifmitteln wieder nach unten, um das nächste Profil 18 zu ergreifen und anschließend wieder in die Sägeposition zu fördern.

Parallel zu der Rückbewegung der Greifmittel bewegen sich die Sägeblätter der Sägeköpfe 12 und 14, um das Profil 18 auf das exakte Maß zuzuschneiden. Das nunmehr zugeschnittene Profil hat hat das Bezugszeichen 26 und ist in den Figuren aus Gründen der Übersicht schwarz dargestellt.

Die Förderfinger 36 bis 46 des Hubschrittförderers 22 sind teleskopierbar ausgebildet. In Abhängigkeit der Größe des Zuschnitts des Profils 26 werden die Förderfinger 36 bis 46 ausgefahren. Bei einem Zuschnitt von 1.100mm werden die Förderfinger 36, 38 und 40, bei einem Zuschnitt von 1.250mm ebenfalls die Förderfinger 36, 38 und 40 und bei einem Zuschnitt von 2.400mm die Förderfinger 36, 38, 40, 42 und 44 teleskopiert, wie den Figuren zu entnehmen ist.

Sobald die Sägeblätter die vordere Endlage erreicht haben, also die Profile 26 zugeschnitten sind, hebt der Hubschrittförderer 22 das Profil 26 hoch, bei gleichzeitigem Entspannen der Spannzylinder der Spannvorrichtung von oben. Das Profil 26 wird somit gehalten und gleichzeitig von den Sägeblättern der Sägeköpfe 12 und 14 gehoben, was wiederum Zeit- und den oben angesprochenen Qualitätsvorteil mit sich bringt.

Sind die Spannzylinder der Spannvorrichtung in ihrer oberen Endlage angekommen, so kann das Profil 26 durch den Hubschrittförderer 22 nach vorne aus dem Bereich der Sägeköpfe 12 und 14 heraustransportiert werden. Gleichzeitig erfolgt der Start für die Einstellung des Sägekopfes 14 auf das neue Maß von 1.250mm, bzw. nach diesen beiden Zuschnitten in diesem Maß auf 2.400mm. Aufgrund der optimierten Steuerung verfährt der Sägekopf 14 immer nach außen, bzw. bleibt bei gleichen Zuschnittsmaßen stehen, wie bereits angesprochen wurde.

Sobald der Hubschrittförderer 22 das Profil 26 aus dem Bereich der Sägeköpfe 12 und 14 gefördert hat, wird also das zuzuschneidende Profil 18 durch die Zuführeinrichtung 30 in die neue Sägeposition, nunmehr 1.250mm, gefördert und in der beschriebenen Weise zugeschitten.

Der Hubschrittförderer 22, der die zugeschnittenen Profile 26 aus dem Bereich der Sägeköpfe 12 und 14 transportiert, hat seine Grundstellung vorne und unten, also außerhalb des Sägebereichs der Sägeblätter der Sägeköpfe 12 und 14. Sobald die Sägeköpfe 12 und 14 in Position sind, fahren die entsprechenden Förderfinger 36 bis 46, die zum Ausheben der entsprechenden Profillänge des zugeschnittenen Profils 26 nötig sind, aus. Danach wird das Profil 26 über die entsprechend zugeordneten Förderfinger 36 bis 46 durch eine Hubschrittbewegung in bezug auf Figur 2 zunächst gehalten, wie gleich noch erläutert wird, und dann nach oben verfahren, so daß das zugesägte Profil 26 aus dem Bereich der Sägeköpfe 12 und 14 bewegt wird.

Durch die Hubschrittbewegung wird das zugeschnittene Profil 26 auf dem Sägetisch 20 außerhalb des Sägebereichs dann abgelegt und die Förderfinger 36 bis 46 durch die Hubschnittbewegung in ihre Grundstellung gebracht.

Ist das nächste zuzuschneidende Profil 18 von oben gespannt, so fahren zumindest Teile der Förderfinger 36 bis 46 des Hubschrittförderers 22 von unten gegen die zuzuschneidenden Profile 18 mit reduziertem Druck, wodurch die als Konterprofile ausgebildeten Enden der Förderfinger 36 bis 46 zur Anlage kommen. Diese wirken somit zum einen als Gegenstück der Spannzylinder mit den Spannmitteln für das zuzusägende Profil 18 und zum anderen für ein sicheres Tragen beim Ausheben nach dem erfolgten Zuschnitt des Profils 18 bis 26.

Sobald die Sägeblätter der Sägeköpfe 12 und 14 das Profil 18 bzw. 26 durchgesägt haben, werden die Hubzylinder 22, 34 des Hubschrittförderers 22 mit vollem Druck beaufschlagt und die zugeschnittenen Profile 26 hochgehoben sowie gegen die Spannzylinder, die in diesem Zeitpunkt entlüftet sind und nur von oben führend wirken, gedrückt. Sobald die Förderfinger 36 bis 46 des Hubschrittförderers 22 ihre obere Endlage erreicht haben, werden die Spannzylinder der Spannvorrichtung eingefahren. Sind die Spannmittel mit den Spannzylindern oben, so verfährt der Hubschrittförderer 22 weiter und transportiert somit die Profile 26 aus dem Bereich der Sägeköpfe 12 und 14. Gleichzeitig beginnt die Zuführvorrichtung 30 das nächste zuzuschneidende Profil 18 von der Ausgangsposition in die Sägeposition zu verfahren.

In der Figur 21 ist eine Zeitachse bei Sägeautomaten nach dem Stand der Technik dargestellt. Dabei handelt es sich um Sägeautomaten, die mit einer automatischen Zuführeinrichtung versehen sind, wie sie in der Beschreibungseinleitung genannt wurden. Zunächst wird das zuzuschneidende Profil in Position gebracht und gespannt. Dies entspricht dem Zeitbereich mit dem Bezugszeichen 48. Anschl. wird eine Seite des Profils auf Gehrung geschnitten, was dem Zeitbereich mit dem Bezugszeichen 50 entspricht. Im Zeitbereich mit dem Bezugszeichen 52 verfährt die Zuführeinrichtung das zuzuschneidende Profil in die weitere Sägeposition. Anschließend wird es über den Zeitbereich 54 geschnitten.

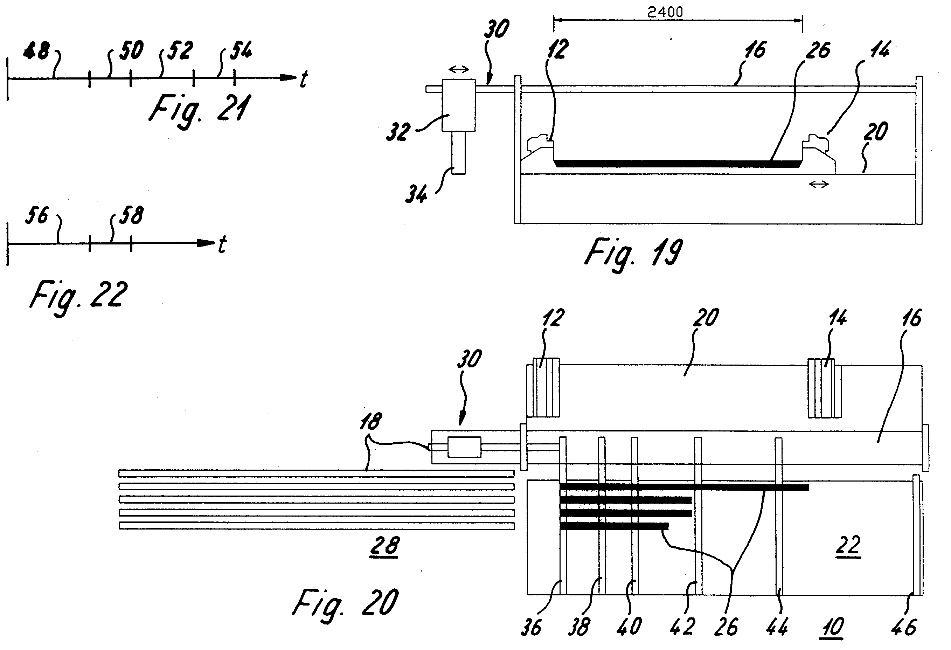

Demgegenüber ist der Arbeitstakt der erfindungsgemäßen Doppelgehrungssäge 10 wesentlich kürzer, da nunmehr nur einmal das Profil 18 verfahren und gespannt wird - Bezugszeichen 56 - und ebenfalls nur einmal beide Gehrungen gleichzeitig geschnitten werden - Bezugszeichen 58, siehe hierzu Figur 22).

Die Erfindung zeichnet sich somit dadurch aus, daß insbesondere mittels der Integration der Zuführeinrichtung 30 in eine Doppelgehrungssäge 10 zusammen mit Fördereinrichtungen, wie den beiden Hubschrittförderern 22 und 28, ein vollautomatischer Betrieb gewährleistet ist.

Hervorzuheben ist ebenfalls, daß die bestehenden Doppelgehrungssägen mit der Zuführeinrichtung 30 und/oder den Hubschrittförderern 22 und 28 nachrüstbar sind. Dies ist insoweit von Vorteil, da dadurch ein automatischer Betrieb durch einfaches Aufrüsten, beispielsweise einer bereits bestehenen Doppelgehrungssäge, ermöglicht wird.

### Bezugszeichenliste

- 10: Doppelgehrungssage
- 12: Sägekopf (links
- 14: Sägekopf (rechts)
- 16: Führungsschiee
- 18: Zuzuschneidendes Profil
- 20: Sägetisch
- 22: Hubschrittförderer
- 26: Zugeschnittenes Profil
- 28: Hubschrittförderer
- 30: Zuführeinrichtung
- 32: Langhubzylinder
- 34: Kurzhubzylinder
- 36: Teleskopierbare Förderfinger
- 38: Teleskopierbare Förderfinger
- 40: Teleskopierbare Förderfinger
- 42: Teleskopierbare Förderfinger
- 44: Teleskopierbare Förderfinger
- 46: Teleskopierbare Förderfinger
- 48: Zeitbereiche
- 50: Zeitbereiche
- 52: Zeitbereiche
- 54: Zeitbereiche
- 56: Zeitbereiche
- 58: Zeitbereiche

## Patentansprüche

1. Doppelgehrungssäge (10) für Profile (18, 26) oder ähnliches mit einer Spanneinrichtung zum Halten der Profile (18, 26) während des Sägens und zwei Sägeköpfen (12, 14), von denen zumindest ein Sägekopf (14) in bezug auf den Abstand zu dem anderen Sägekopf (12) einstellbar ausgeführt ist und die für den Sägevorgang gleichzeitig bewegt und anschließend wieder zurückbewegt werden, **dadurch gekennzeichnet**, daß eine Zuführeinrichtung (30) vorgesehen ist, die zumindest ein zuzusägendes Profil (18) aus einer Ausgangsposition in zumindest eine Sägeposition bei den Sägeköpfen (12, 14) transportiert so daß dieses von der Spanneinrichtung für den Sägevorgang fixiert werden kann.

2. Doppelgehrungssäge nach Anspruch 1, **dadurch gekennzeichnet**, daß die Zuführeinrichtung (30) in Abhängigkeit der Betriebsweise der Sägeköpfe (12, 14) gesteuert ist.

3. Doppelgehrungssäge nach Anspruch 2, **dadurch gekennzeichnet,** daß die Zuführeinrichtung (30) und die Sägeköpfe (12, 14) so gesteuert sind, daß der Transport des zuzusägenden Profils (18) durch die Zuführeinrichtung (30) und die Einstellung der Sägeköpfe (12, 14) gleichzeitig erfolgt.

4. Doppelgehrungssäge nach einem der vorangehenden Ansprüche, **dadurch gekennzeichnet**, daß die Zuführeinrichtung (30) oberhalb der Sägeköpfe (12, 14) angeordnet ist.

5. Doppelgehrungssäge nach einem der vorangehenden Ansprüche, **dadurch gekennzeichnet**, daß die Zuführeinrichtung (30) Greifmittel zum Transportieren der Profile (18, 26) aufweist.

6. Doppelgehrungssage nach Anspruch 5, **dadurch gekennzeichnet**, daß die Greifmittel das Profil (18, 26) von oben ergreifen.

7. Doppelgehrungssäge nach Anspruch 5 oder 6, **dadurch gekennzeichnet**, daß die Greifmittel drehbar gelagert sind.

8. Doppelgehrungssäge nach einem der vorangehenden Ansprüche, **dadurch gekennzeichnet**, daß die Zuführeinrichtung (30) zumindest einen Hubzylinder (32, 34) aufweist, durch den ein lineares Bewegen des Profiles (18, 20) quer zur Transportrichtung der Zuführeinrichtung (30) ermöglicht wird.

9. Doppelgehrungssäge nach Anspruch 8, **dadurch gekennzeichnet**, daß die Zuführeinrichtung (30) einen in Reihe geschalteten Kurzhubzylinder (34) und einen Langhubzylinder (32) aufweist.

10. Doppelgehrungssäge nach Anspruch 9, **dadurch gekennzeichnet**, daß einer der beiden Zylinder (32, 34) als ein in dem anderen Zylinder (32, 34) gelagerter Kolben ausgebildet ist.

11. Doppelgehrungssäge nach Anspruch 9 oder 10, **dadurch gekennzeichnet**, daß die Zylinder (32, 34) pneumatisch betrieben sind.

12. Doppelgehrungssäge nach einem der vorangehenden Ansprüche 5 bis 11, **dadurch gekennzeichnet**, daß die Zuführeinrichtung (30) eine in Transportrichtung sich erstreckende Führungsschiene (16) aufweist, entlang der die Greifmittel verfahrbar sind.

13. Doppelgehrungssäge nach einem der vorangehenden Ansprüche, **dadurch gekennzeichnet**, daß eine Fördereinrichtung (28) in Abhängigkeit der Betriebsweise der Zuführeinrichtung (30) die Profile (18, 26) in die Ausgangsposition fördert.

14. Doppelgehrungssage nach einem der vorangehenden Ansprüche, **dadurch gekennzeichnet**, daß eine weitere Fördereinrichtung (22) in Abhängigkeit der Betriebsweise der Sägeköpfe (14, 19) die zugeschnittenen Profile (18, 26) aus der Sägenposition fördert.

15. Doppelgehrungssäge nach Anspruch 13 oder 14, **dadurch gekennzeichne**t, daß die Fördereinrichtung (28) und/oder die weitere Fördereinrichtung (22) durch einen Hubschrittförderer gebildet sind.

16. Doppelgehrungssäge nach Anspruch 14 oder 15, **dadurch gekennzeichnet**, daß die weitere Fördereinrichtung (22) die Hub-Schritt-Bewegung ausführende Förderfinger (36 bis 46) aufweist, die auf der den Sägeköpfen (12, 14) zugewandten Seite teleskopierbar ausgeführt sind.

17. Doppelgehrungssäge nach Anspruch 16, **dadurch gekennzeichnet**, daß in der weiteren Fördereinrichtung (22) mehrere teleskopierbare Förderfinger (36 bis 46) nebeneinander angeordnet und diese so gesteuert sind, daß in Abhängigkeit der Länge des zugeschnittenen Profiles (26) lediglich die entsprechend den zugeschnittenen Profilen (26) zugeordneten Förderfinger (36 bis 46) teleskopiert werden.

18. Doppelgehrungsringe nach einem der Ansprüche 14 bis 17, **dadurch gekennzeichnet**, daß die Förderfinger des Hubschnittförderers der weiteren Fördereinrichtung (22) als Teil der Spannvorrichtung ausgebildet und gesteuert sind.

19. Doppelgehrungssäge nach einem der Ansprüche 14 bis 18, **dadurch gekennzeichnet**, daß die Sägeköpfe (12, 14) eine Zuschnittbewegung aufeinander zu durchführen und diese sowie die weitere Fördereinrichtung (22) so gesteuert sind, daß das zugeschnittene Profil (26) von der weiteren Fördereinrichtung (22) in der Sägeposition angehoben wird, bevor die Sägeköpfe (12, 14) zurückbewegt werden.
